# EUROPÄISCHE PATENTSCHRIFT

(11) **EP 3 900 093 B1**
(45) Veröffentlichungstag und Bekanntmachung des Hinweises auf die Patenterteilung: **22.04.2026**
(21) Anmeldenummer: 19827591.9
(22) Anmeldetag: 19.12.2019
(51) Int. Cl.: H01M 8/04537, H01M 8/04701, H01M 8/04746, H01M 8/04828, H01M 8/04858

(54) **BETRIEBSVORRICHTUNG, BRENNSTOFFZELLENSYSTEM, KRAFTFAHRZEUG UND VERFAHREN ZUM BETREIBEN EINES BRENNSTOFFZELLENSYSTEMS**
OPERATING EQUIPMENT, FUEL-CELL SYSTEM, MOTOR VEHICLE AND METHOD FOR OPERATING A FUEL-CELL SYSTEM
DISPOSITIF DE FONCTIONNEMENT, SYSTEME DE PILE A COMBUSTIBLE, VEHICULE A MOTEUR ET PROCEDE POUR FAIRE FONCTIONNER UN SYSTEME DE PILE A COMBUSTIBLE

(30) Priorität: 20.12.2018 AT 511452018
(43) Veröffentlichungstag der Anmeldung: 27.10.2021
(73) Patentinhaber: AVL List GmbH, 8020 Graz (AT)
(72) Erfinder: KOGLER, Markus, DI, 8045 Graz (AT); SCHENK, Alexander, DI, 8580 Graz (AT); POFAHL, Stefan, 8020 Graz (AT)
(86) Internationale Anmeldenummer: PCT/AT2019/060442
(87) Internationale Veröffentlichungsnummer: WO 2020/124115

(56) Entgegenhaltungen:
- EP-A2- 2 052 429
- DE-A1- 102015 221 840
- DE-T5- 112007 002 792

## Beschreibung

Die vorliegende Erfindung betrifft eine Betriebsvorrichtung zum Betreiben einer Brennstoffzelle, aufweisend ein Spannungsüberwachungsmodul zum Überwachen einer Zellspannung der Brennstoffzelle und ein Kontrollmodul zum Kontrollieren des Betriebs der Brennstoffzelle. Ferner betrifft die Erfindung ein Brennstoffzellensystem zur Bereitstellung elektrischer Energie mit einer erfindungsgemäßen Betriebsvorrichtung, ein Kraftfahrzeug mit einem erfindungsgemäßen Brennstoffzellensystem sowie ein Verfahren zum Betreiben eines erfindungsgemäßen Brennstoffzellensystems.

Brennstoffzellensysteme sind im Stand der Technik in einer Vielzahl unterschiedlicher Ausführungsformen bekannt. Brennstoffzellensysteme weisen oftmals Sensoren zum Messen von Betriebsparametern der Brennstoffzelle, wie beispielsweise elektrischer Spannung, elektrischer Stromstärke, Temperatur, Feuchtigkeit oder Druck, auf. Verlässt ein Betriebsparameter einen vorgegebenen Betriebsparameterbereich, sodass eine Betriebssicherheit der Brennstoffzelle gefährdet ist, muss die Brennstoffzelle zumeist abgeschaltet oder zumindest heruntergeregelt werden.

Wichtige Betriebsparameter einer Brennstoffzelle sind die Charakteristika der Einzelzellspannungen des Brennstoffzellen Stacks. Zum Überwachen der Zellspannung über einen Zeitraum weisen Brennstoffzellensysteme üblicherweise ein Überwachungsmodul auf. Wenn die Zellspannung in einem Betriebsmodus der Brennstoffzelle, also beispielsweise beim Hochfahren, im Dauerbetrieb oder beim Herunterfahren, von einem vorgegebenen Spannungsbereich abweicht, wie beispielsweise einen Spannungsgrenzwert unterschreitet, übersteigt und/oder im Durchschnitt zu hoch oder zu niedrig ausfällt, kann ein für die Brennstoffzelle unvorteilhafter Betriebszustand vorliegen, welcher beispielsweise die Lebensdauer, eine Betriebssicherheit oder dergleichen der Brennstoffzelle negativ beeinflussen kann.

Die JP 2017 152 134 A betrifft ein Brennstoffzellensystem mit einem Brennstoffzellen Stack aus mehreren Brennstoffzellen, eine Rückstandsbestimmungsvorrichtung zum Ermitteln von Wasserstoffrückständen in dem Brennstoffzellen-Stack beim Starten des Brennstoffzellensystems, eine Cell Voltage Monitoring (CVM) Einheit zum Ermitteln der elektrischen Spannungen der einzelnen Brennstoffzellen, ein Hauptschalter zum elektrischen Ein- und Ausschalten des Brennstoffzellen-Stacks, eine Bestimmungseinheit zum Bestimmen, ob die Spannungen innerhalb vorgegebener Grenzwerte liegen sowie eine Hauptschalter-Kontrolleinheit zum Steuern einer Wasserstoffversorgung des Brennstoffzellen-Stacks in Abhängigkeit der ermittelten Spannungen. Demnach werden Arbeitspunkte des Brennstoffzellensystems in Abhängigkeit einer Spannungsüberwachung des Brennstoffzellensystems mittels der CVM Einheit sowie unter Berücksichtigung eines Betriebszustands des Brennstoffzellensystems ermittelt.

Aus der US 2018 026 286 A1 ist ein Brennstoffzellensystem bekannt, aufweisend eine Brennstoffversorgungsvorrichtung, eine Luftversorgungsvorrichtung mit einer Luftmassenmessvorrichtung, eine Spannungsmessvorrichtung zum Messen der elektrischen Spannung der Brennstoffzellen und eine Kontrollvorrichtung. Die Kontrollvorrichtung ist ausgebildet, die Brennstoffversorgungsvorrichtung zur Versorgung der Brennstoffzelle beim Starten der Brennstoffzelle über ein erstes Zeitintervall zu steuern. Ferner ist die Kontrollvorrichtung ausgebildet, nach Ablauf des ersten Zeitintervalls die Luftversorgungsvorrichtung zum Versorgen der Brennstoffzelle mit Luft über ein zweites Zeitintervall zu steuern. Ferner ist die Kontrollvorrichtung ausgebildet, die im zweiten Zeitintervall zugefügte Luftmenge zu bestimmen und mit einer Luftgrenzmenge zu vergleichen sowie bei Erreichen bzw. Überschreiten der Luftgrenzmenge eine Ausgangsspannung der Brennstoffzellen mit einer vorgegebenen Ausgangsspannung zu vergleichen. Schließlich ist die Kontrollvorrichtung ausgebildet, bei Unterschreiten der vorgegebenen Ausgangsspannung eine Anomalität der Brennstoffzellen festzustellen.

Die EP 3 038 199 A1 offenbart ein Brennstoffzellensystem mit einer Brennstoffzelle, einem Temperatursensor zum Messen einer Temperatur der Brennstoffzelle und einer Steuerungsvorrichtung zum Veranlassen der Brennstoffzelle, durch Senken einer Temperatur der Brennstoffzelle eine relative Feuchte innerhalb der Brennstoffzelle zu erhöhen. Überdies weist das Brennstoffzellensystem ein Impedanzmessgerät zum Messen einer Impedanz der Brennstoffzelle auf, wobei die Steuerungsvorrichtung ausgebildet ist, eine Änderung der Wasserbilanz in Abhängigkeit der gemessenen Impedanz durchzuführen, wenn die gemessene Impedanz einen Impedanzschwellwert erreicht oder unterschreitet.

Ähnliche Systeme und Verfahren werden durch die DE 10 2015 221840 A1 und die EP 2 052 429 A2 offenbart.

Bekannte Brennstoffzellensysteme sowie Verfahren zum Betreiben von Brennstoffzellen haben den Nachteil, dass im Wesentlichen lediglich eine Ermittlung des "State of Operation" (SOO) der Brennstoffzelle durchgeführt wird. Im Falle eines Überschreitens bzw. Unterschreitens eines Betriebsparametergrenzwerts muss die Brennstoffzelle zumeist heruntergefahren werden. Dies wirkt sich besonders negativ auf eine Zuverlässigkeit der Brennstoffzelle aus, da diese im heruntergefahrenen Zustand zur Bereitstellung elektrischer Energie nicht zur Verfügung steht.

Daher ist es die Aufgabe der vorliegenden Erfindung, der voranstehend beschriebenen Problematik zumindest teilweise Rechnung zu tragen. Insbesondere ist es die Aufgabe der vorliegenden Erfindung, eine Betriebsvorrichtung zum Betreiben einer Brennstoffzelle, ein Brennstoffzellensystem, ein Kraftfahrzeug sowie ein Verfahren zum Betreiben eines Brennstoffzellensystems zu schaffen, welche mit einfachen Mitteln sowie auf eine kostengünstige Art und Weise einen Betrieb der Brennstoffzelle verbessern und eine zwangsweise Abschaltung der Brennstoffzelle zumindest teilweise verhindern kann.

Die voranstehende Aufgabe wird durch die Patentansprüche gelöst. Insbesondere wird die voranstehende Aufgabe durch die Betriebsvorrichtung zum Betreiben einer Brennstoffzelle gemäß Anspruch 1, das Brennstoffzellensystem zur Bereitstellung elektrischer Energie gemäß Anspruch 7, das Kraftfahrzeug gemäß Anspruch 8 sowie das Verfahren zum Betreiben eines Brennstoffzellensystems gemäß Anspruch 9 gelöst. Weitere Vorteile der Erfindung ergeben sich aus den Unteransprüchen, der Beschreibung und den Zeichnungen. Dabei gelten Merkmale und Details, die im Zusammenhang mit der erfindungsgemäßen Betriebsvorrichtung beschrieben sind, selbstverständlich auch im Zusammenhang mit dem erfindungsgemäßen Brennstoffzellensystem, dem erfindungsgemäßen Kraftfahrzeug sowie dem erfindungsgemäßen Verfahren zum Betreiben eines Brennstoffzellensystems und jeweils umgekehrt, sodass bezüglich der Offenbarung zu den einzelnen Erfindungsaspekten stets wechselseitig Bezug genommen wird bzw. werden kann.

Gemäß dem ersten Aspekt der vorliegenden Erfindung wird die Aufgabe durch eine Betriebsvorrichtung zum Betreiben einer Brennstoffzelle gelöst. Die Betriebsvorrichtung weist ein Spannungsüberwachungsmodul zum Überwachen einer Zellspannung der Brennstoffzelle und ein Kontrollmodul zum Kontrollieren des Betriebs der Brennstoffzelle auf. Erfindungsgemäß weist die Betriebsvorrichtung ein Speichermodul zum Speichern einer Zellspannungsmatrix sowie ein Vergleichsmodul zum Vergleichen eines Betriebsmodus der Brennstoffzelle und der überwachten Zellspannung mit der Zellspannungsmatrix zum Ermitteln mindestens einer spezifischen Gegenmaßnahme zum Beeinflussen der Zellspannung der Brennstoffzelle aus der Zellspannungsmatrix auf. Das Kontrollmodul weist Reaktionsmittel auf für einen Kontrolleingriff in den Betrieb der Brennstoffzelle auf Basis der ermittelten mindestens einer spezifischen Gegenmaßnahme.

Die Betriebsvorrichtung ist zum Betreiben der Brennstoffzelle ausgebildet. Demnach sind Betriebsparameter der Brennstoffzelle, wie beispielsweise ein Wasserstoffmassenstrom, ein Luftmassenstrom, ein Luftbefeuchterbypass oder dergleichen, mittels der Betriebsvorrichtung, insbesondere mittels der Reaktionsmittel des Kontrollmoduls der Betriebsvorrichtung, gezielt beeinflussbar bzw. steuerbar. Die Betriebsvorrichtung ist vorzugsweise zum Steuern und/oder Regeln der Brennstoffzelle ausgebildet.

Das Spannungsüberwachungsmodul ist zum Überwachen der Zellspannung der Brennstoffzelle ausgebildet. Hierfür weist das Spannungsüberwachungsmodul vorzugsweise eine Spannungsmessvorrichtung zum Ermitteln der Zellspannung der Brennstoffzelle über einen Zeitraum auf. Somit ist mittels des Spannungsüberwachungsmoduls über den Zeitraum beispielsweise eine durchschnittliche Zellspannung und/oder minimale Zellspannung und maximale Zellspannung des Brennstoffzellen Stacks ermittelbar. Das Spannungsüberwachungsmodul ist zudem ausgebildet, die vom Spannungsüberwachungsmodul ermittelten Zellspannungen, insbesondere die durchschnittliche Zellspannung und/oder minimale Zellspannung und maximale Zellspannung, dem Vergleichsmodul bereitzustellen. Alternativ kann das Spannungsüberwachungsmodul zum Ermitteln und Weiterleiten der Zellspannungen an das Vergleichsmodul ausgebildet sein, wobei das Vergleichsmodul ausgebildet ist, die durchschnittliche Zellspannung hieraus zu ermitteln bzw. zu berechnen.

Das Speichermodul ist zum Speichern der Zellspannungsmatrix ausgebildet. Vorzugsweise ist die Zellspannungsmatrix bereits im Speichermodul gespeichert. Es können auch mehrere unterschiedliche Signalreaktionsmatrizen im Speichermodul gespeichert sein, wobei das Vergleichsmodul vorzugsweise zur Auswahl der zu verwendenden Zellspannungsmatrix ausgebildet ist, beispielsweise in Abhängigkeit einer Betriebshistorie der Brennstoffzelle, eines Verschleißzustands der Brennstoffzelle, einer Gesamtbetriebsdauer der Brennstoffzelle, einer Benutzervorgabe oder dergleichen. Die Zellspannungsmatrix ist eine Matrix, in welcher für eine Paarung aus einem Betriebsmodus der Brennstoffzelle mit einer Zellspannung, insbesondere einer durchschnittlichen Zellspannung und/oder maximalen Zellspannung und minimalen Zellspannung, mindestens eine spezifische Gegenmaßnahme festgelegt ist. Die spezifischen Gegenmaßnahmen sind vorzugsweise derart festgelegt, dass diese zum Beeinflussen der Zellspannung der Brennstoffzelle geeignet sind. Unter einem Beeinflussen der Zellspannung wird insbesondere ein derartiges Beeinflussen der Zellspannung verstanden, dass die Zellspannung innerhalb eines vorgegebenen Zellspannungsbereichs liegt. Hierdurch ist neben der Sicherstellung einer vordefinierten Zellspannung auch ein Verschleiß der Brennstoffzelle reduzierbar.

Die Brennstoffzelle kann im Rahmen der Erfindung sukzessive unterschiedliche Betriebsmodi durchlaufen. Betriebsmodi eines Brennstoffzellensystems sind beispielsweise ein Hochfahren, ein Normalbetrieb sowie ein Herunterfahren des Brennstoffzellensystems. Vorzugsweise ist das Vergleichsmodul zum Ermitteln, insbesondere zum eigenständigen Ermitteln, des aktuellen Betriebsmodus ausgebildet.

Das Kontrollmodul ist zum Kontrollieren des Betriebs der Brennstoffzelle ausgebildet. Ferner weist das Kontrollmodul die Reaktionsmittel auf, um auf Basis der mindestens einen ermittelten spezifischen Gegenmaßnahme den Kontrolleingriff in den Betrieb der Brennstoffzelle durchzuführen.

Die Betriebsvorrichtung ist vorzugsweise ausgebildet, die Brennstoffzelle automatisch zu betreiben, sodass das Überwachen der Zellspannung, das Ermitteln des aktuellen Betriebsmodus, das Kontrollieren des Betriebs der Brennstoffzelle, die Identifizierung sowie die Durchführung der geeigneten spezifischen Gegenmaßnahmen automatisch durchführbar sind. Somit ist die Betriebsvorrichtung ausgebildet, auf Veränderungen der Zellspannung fortlaufend zu reagieren, um diese Abweichungen zu reduzieren.

Die erfindungsgemäße Betriebsvorrichtung zum Betreiben einer Brennstoffzelle hat gegenüber herkömmlichen Betriebsvorrichtungen den Vorteil, dass mit einfachen Mitteln sowie auf eine kostengünstige Art und Weise auf Basis ermittelter Zellspannungen sowie dem aktuellen Betriebsmodus der Brennstoffzelle konkrete spezifische Gegenmaßnahmen identifizierbar sind, mittels welcher die Zellspannung der Brennstoffzelle auf vorteilhafte Weise veränderbar ist. Mittels der erfindungsgemäßen Betriebsvorrichtung ist somit eine schnelle Reaktion auf Schwankungen der Zellspannung erzielbar und somit ein längerer bzw. robusterer Betrieb der Brennstoffzelle gewährleistbar.

Erfindungsgemäß ist bei einer Betriebsvorrichtung vorgesehen, dass das Spannungsüberwachungsmodul zum Ermitteln einer durchschnittlichen Zellspannung über alle Einzelzellspannungen sowie zum Ermitteln einer innerhalb des vordefinierten Zeitraums maximalen Zellspannung und minimalen Zellspannung ausgebildet ist. Die durchschnittliche Zellspannung sowie die maximale und die minimale Zellspannung sind vorteilhafte Kennzahlen für den Betriebszustand der Brennstoffzelle. Anhand dieser Kennzahlen kann beurteilt werden, ob die Brennstoffzelle in dem aktuellen Betriebsmodus einen normalen bzw. unkritischen Betriebszustand, einen noch akzeptablen Betriebszustand oder einen kritischen Betriebszustand aufweist. Dies hat den Vorteil, dass die Betriebsvorrichtung mit einfachen Mitteln sowie auf eine kostengünstige Art und Weise ausgebildet ist, auf Basis der ermittelten Zellspannung und des Betriebsmodus mittels der Zellspannungsmatrix eine besonders geeignete Gegenmaßnahme zum Beeinflussen der Zellspannung zu identifizieren sowie durchzuführen.

Es ist bevorzugt, dass die Zellspannungsmatrix mehrere Betriebsmodi aufweist, wobei jedem Betriebsmodus mehrere Zellspannungsklassen zugeordnet sind, und wobei den einzelnen Zellspannungsklassen jeweils mindestens eine spezifische Gegenmaßnahme zum Beeinflussen der Zellspannung der Brennstoffzelle zugeordnet ist. Die Betriebsmodi umfassen vorzugsweise ein Hochfahren und/oder ein Normalbetrieb und/oder ein Herunterfahren der Brennstoffzelle. Die einzelnen Zellspannungsklassen umfassen vorzugsweise eine oder mehrere Zellspannungsaussagen. Eine Zellspannungsaussage ist beispielsweise eine Höhe einer durchschnittlichen Zellspannung über alle aktuellen Einzelzellspannungen. Demnach kann eine Zellspannungsklasse durch eine Zellspannungsaussage oder eine Kombination mehrerer Zellspannungsaussagen definiert sein. Eine Kombination mehrerer Zellspannungsaussagen kann beispielsweise eine UND-Verknüpfung oder eine ODER-Verknüpfung der Zellspannungsaussagen aufweisen. Auf Basis der überwachten Zellspannung und des ermittelten Betriebsmodus ist somit eine konkrete Zellspannungsklasse der Zellspannungsmatrix bestimmbar. Den einzelnen Zellspannungsklassen ist jeweils mindestens eine spezifische Gegenmaßnahme zum Beeinflussen der Zellspannung der Brennstoffzelle zugeordnet, sodass bei bestimmter Zellspannungsklasse eine oder mehrere potenzielle spezifische Gegenmaßnahmen bestimmt sind. Dies hat den Vorteil, dass mit einfachen Mitteln sowie auf eine kostengünstige Art und Weise die Identifizierung einer geeigneten spezifischen Gegenmaßnahme verbessert ist.

Besonders bevorzugt weisen die einzelnen Zellspannungsklassen jeweils mindestens eine der folgenden Zellspannungsaussagen auf:
- Durchschnittliche Zellspannung über einen vorgegebenen Zeitraum,
- eine minimale Zellspannung über einen vordefinierten Zeitraum,
- eine maximale Zellspannung über den vordefinierten Zeitraum,
- das Überschreiten eines vorgegebenen Zellspannungsmaximums in dem vorgegebenen Zeitraum,
- das Unterschreiten eines vorgegebenen Zellspannungsminimums in dem vorgegebenen Zeitraum.

Die durchschnittliche Zellspannung ist durch Überwachen der Zellspannung, insbesondere durch ständiges Messen und Mitteln der Einzelzellspannungen, leicht bestimmbar. Diese Zellspannungsaussage ist weiter konkretisierbar, wonach die durchschnittliche Zellspannung beispielsweise einem vorgegebenen Zellspannungsdurchschnittswert entspricht, den vorgegebenen Zellspannungsdurchschnittswert übersteigt oder den vorgegebenen Zellspannungsdurchschnittswert unterschreitet. Unter der Zellspannungsaussage "minimale Zellspannung über einen vordefinierten Zeitraum" wird im Rahmen der Erfindung verstanden, dass ein festgelegter unterer Grenzwert der Zellspannung über den vordefinierten Zeitraum unterschritten wird. Ein Unterschreiten des unteren Grenzwerts ist demnach erst dann von Bedeutung, wenn es über mindestens den vordefinierten Zeitraum andauert. Dementsprechend wird unter der Zellspannungsaussage "maximale Zellspannung über einen vordefinierten Zeitraum" im Rahmen der Erfindung verstanden, dass ein festgelegter oberer Grenzwert der Zellspannung über den vordefinierten Zeitraum überschritten wird. Ein Überschreiten des oberen Grenzwerts ist demnach erst dann von Bedeutung, wenn es über mindestens den vordefinierten Zeitraum andauert. Bei dem Überschreiten des vorgegebenen Zellspannungsmaximums sowie dem Unterschreiten des vorgegebenen Zellspannungsminimums reicht es hingegen aus, wenn dieser Zustand in nur einem Augenblick vorliegt, um die jeweilige Zellspannungsaussage zu erfüllen. Daher ist das Zellspannungsmaximum größer als der obere Grenzwert und das Zellspannungsminimum geringer als der untere Grenzwert. Mittels dieser Zellspannungsaussagen sind in Verbindung mit Betriebsmodi der Brennstoffzelle auf vorteilhafte Weise Zellspannungsklassen definierbar, welche zum Charakterisieren von Betriebszuständen der Brennstoffzelle besonders geeignet sind, sodass auf dieser Basis eine Identifizierung geeigneter spezifischer Gegenmaßnahmen verbessert ist.

Weiter bevorzugt weist die Zellspannungsmatrix für mindestens eine Betriebszustandsklasse mehrere unterschiedliche spezifische Gegenmaßnahmen auf. Auf diese Weise wird der Tatsache Rechnung getragen, dass verschiedene spezifische Gegenmaßnahmen geeignet sein können, um eine Zellspannung der Brennstoffzelle zu beeinflussen. Bei einer minimalen Zellspannung über einen vordefinierten Zeitraum und einer bestimmten durchschnittlichen Zellspannung über einen vorgegebenen Zeitraum oberhalb eines vorgegebenen Zellspannungsdurchschnittswerts ist somit beispielsweise eine spezifische Gegenmaßnahme identifizierbar, mittels welcher die Zellspannung erhöhbar ist. Dies hat den Vorteil, dass ein Beeinflussen der Zellspannung der Brennstoffzelle mit einfachen Mitteln sowie auf eine kostengünstige Art und Weise optimierbar ist.

Vorzugsweise sind die unterschiedlichen spezifischen Gegenmaßnahmen innerhalb einer Betriebszustandsklasse in der Zellspannungsmatrix hierarchisch gegliedert. Auf Basis der hierarchischen Gliederung sind die spezifischen Gegenmaßnahmen sukzessive auswählbar und durchführbar. Sollte sich die Betriebszustandsklasse nach Durchführen einer am höchsten hierarchisierten spezifischen Gegenmaßnahme nicht verbessern, kann somit die in der Hierarchie folgende spezifische Gegenmaßnahme ausgewählt und durchgeführt werden, usw. Die Betriebsvorrichtung ist somit ausgebildet, auf unerwartete Ereignisse, wie beispielsweise ein zu geringer Anstieg der Zellspannung als Folge der Durchführung einer spezifischen Gegenmaßnahme, entsprechend zu reagieren, um die Zellspannung der Brennstoffzelle stets auf eine moderate Weise zu beeinflussen.

Es kann erfindungsgemäß vorgesehen sein, dass die Zellspannungsmatrix als spezifische Gegenmaßnahmen mindestens eine der folgenden Maßnahmen aufweist:
- Erhöhen eines Zelldrucks der Brennstoffzelle,
- Reduzieren des Zelldrucks der Brennstoffzelle,
- Erhöhen einer Zelltemperatur der Brennstoffzelle,
- Reduzieren der Zelltemperatur der Brennstoffzelle,
- Erhöhen einer Zellluftfeuchte der Brennstoffzelle,
- Reduzieren einer Zellluftfeuchte der Brennstoffzelle,
- Erhöhen des Anodenbetriebsmittelstroms der Brennstoffzelle,
- Reduzieren eines Anodenbetriebsmittelstroms der Brennstoffzelle,
- Reduzieren eines Kathodenbetriebsmittelstroms (Kathoden-Stöchiometrie) der Brennstoffzelle,
- Erhöhen des Kathodenbetriebsmittelstroms (Kathoden Stöchiometrie) der Brennstoffzelle.

Mittels dieser spezifischen Gegenmaßnahmen ist die Zellspannung der Brennstoffzelle direkt beeinflussbar. Diese spezifischen Gegenmaßnahmen sind den einzelnen Zellspannungsklassen zugeordnet, wobei eine Zellspannungsklasse eine oder mehrere spezifische Gegenmaßnahmen aufweisen kann. Somit ist durch die Zellspannungsmatrix festgelegt, welche spezifischen Gegenmaßnahmen bei welcher Zellspannungsklasse durchführbar sind, um die Zellspannung der Brennstoffzelle zu beeinflussen, beispielsweise um die Zellspannung, insbesondere beim Hochfahren der Brennstoffzelle, zu erhöhen.

Gemäß dem zweiten Aspekt der Erfindung wird die Aufgabe durch ein Brennstoffzellensystem zur Bereitstellung elektrischer Energie gelöst. Das Brennstoffzellensystem weist eine Brennstoffzelle und eine erfindungsgemäße Betriebsvorrichtung zum Betreiben der Brennstoffzelle auf. Die Brennstoffzelle ist vorzugsweise gemäß einer herkömmlichen Brennstoffzelle mit einer Membran, einer Anode, einer Kathode, einer Brennstoffzufuhr, einer Sauerstoffzufuhr sowie einer Wasserabfuhr ausgebildet. Vorzugsweise weist das Brennstoffzellensystem mehrere Brennstoffzellen auf, wobei eine Betriebsvorrichtung vorzugsweise zum Betreiben mehrerer Brennstoffzellen ausgebildet und eingerichtet ist. Zusätzlich kann vorgesehen sein, dass das Brennstoffzellensystem mehrere erfindungsgemäße Betriebsvorrichtungen aufweist, welche jeweils zum Betreiben einer oder mehrerer Brennstoffzellen ausgebildet und eingerichtet sind.

Damit bringt ein erfindungsgemäßes Brennstoffzellensystem die gleichen Vorteile mit sich, wie sie ausführlich mit Bezug auf die erfindungsgemäße Betriebsvorrichtung beschrieben worden sind. Demnach hat das erfindungsgemäße Brennstoffzellensystem gegenüber herkömmlichen Brennstoffzellensystemen den Vorteil, dass mit einfachen Mitteln sowie auf eine kostengünstige Art und Weise auf Basis ermittelter Zellspannungen sowie dem aktuellen Betriebsmodus der einzelnen Brennstoffzellen konkrete spezifische Gegenmaßnahmen identifizierbar sind, mittels welcher die Zellspannungen der Brennstoffzellen auf vorteilhafte Weise veränderbar sind. Mittels des erfindungsgemäßen Brennstoffzellensystems ist somit eine schnelle Reaktion auf Schwankungen der Zellspannungen erzielbar und somit ein längerer bzw. robusterer Betrieb der einzelnen Brennstoffzellen gewährleistbar.

Gemäß dem dritten Aspekt der Erfindung wird die Aufgabe durch ein Kraftfahrzeug mit einem erfindungsgemäßen Brennstoffzellensystem zur Bereitstellung elektrischer Energie und wenigstens einem Elektromotor zum Antreiben des Kraftfahrzeugs unter zumindest teilweiser Verwendung der elektrischen Energie, die durch das Brennstoffzellensystem bereitgestellt wird, gelöst. Vorzugsweise weist das Kraftfahrzeug mindestens eine Batterie zum Speichern bzw. Zwischenspeichern der von dem Brennstoffzellensystem bereitgestellten elektrischen Energie auf.

Damit bringt ein erfindungsgemäßes Kraftfahrzeug die gleichen Vorteile mit sich, wie sie ausführlich mit Bezug auf die erfindungsgemäße Betriebsvorrichtung sowie das erfindungsgemäße Brennstoffzellensystem beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise auf Basis ermittelter Zellspannungen sowie dem aktuellen Betriebsmodus der einzelnen Brennstoffzellen konkrete spezifische Gegenmaßnahmen identifizierbar sind, mittels welcher die Zellspannungen der Brennstoffzellen auf vorteilhafte Weise veränderbar sind. Mittels des erfindungsgemäßen Kraftfahrzeugs ist somit eine schnelle Reaktion auf Schwankungen der Zellspannungen erzielbar und somit ein längerer bzw. robusterer Betrieb der einzelnen Brennstoffzellen gewährleistbar.

Gemäß dem vierten Aspekt der Erfindung wird die Aufgabe durch ein Verfahren zum Betreiben eines erfindungsgemäßen Brennstoffzellensystems gelöst. Das Verfahren weist die folgenden Schritte auf:
- Ermitteln der aktuellen Charakteristika von Zellspannungen der Brennstoffzellen bzw. des Brennstoffzellen Stacks, insbesondere über einen vorgegebenen Zeitraum, mittels des Spannungsüberwachungsmoduls der Betriebsvorrichtung,
- Bestimmen eines Betriebsmodus der Brennstoffzelle mittels des Kontrollmoduls der Betriebsvorrichtung,
- Vergleichen der ermittelten Zellspannungen sowie des bestimmten Betriebsmodus mit einer in dem Speichermodul gespeicherten Zellspannungsmatrix zum Identifizieren einer spezifischen Gegenmaßnahme zum Beeinflussen der Zellspannung der Brennstoffzelle mittels des Vergleichsmoduls und
- Erzeugen eines Kontrolleingriffs in den Betrieb der Brennstoffzelle auf Basis der identifizierten spezifischen Gegenmaßnahme mittels des Kontrollmoduls.

Das Ermitteln der Zellspannungen der Brennstoffzelle erfolgt mittels des Spannungsüberwachungsmoduls. Hierfür weist das Spannungsüberwachungsmodul vorzugsweise ein Spannungsmessmodul zum Messen der Zellspannung auf. Das Ermitteln der Zellspannungen erfolgt vorzugsweise kontinuierlich bzw. intermittierend, insbesondere in regelmäßigen, vorzugsweise hochfrequenten, Zeitabständen. Hierbei kann beispielsweise eine durchschnittliche aktuelle Zellspannung, insbesondere über den vorgegebenen Zeitraum, ermittelt werden.

Zudem wird mittels des Kontrollmoduls ein Betriebsmodus der Brennstoffzelle bestimmt. Betriebsmodi können beispielsweise ein Hochfahren, ein Normalbetrieb, ein Herunterfahren oder dergleichen der Brennstoffzelle sein.

Das Vergleichsmodul vergleicht die ermittelten Zellspannungen und den bestimmten Betriebsmodus mit der in dem Speichermodul gespeicherten Zellspannungsmatrix, um auf diese Weise mindestens eine spezifische Gegenmaßnahme zum Beeinflussen der Zellspannung der Brennstoffzelle zu Identifizieren. Hierbei wird beispielsweise anhand der ermittelten Zellspannungen zunächst eine konkrete Zellspannungsklasse identifiziert. Die Zellspannungsklassen sind in der Zellspannungsmatrix aufgeführt. Ferner sind jeder Zellspannungsklasse eine oder mehrere spezifische Gegenmaßnahmen zugeordnet. Es kann erfindungsgemäß vorgesehen sein, dass eine spezifische Gegenmaßnahme ein Nichteingreifen in den Betrieb der Brennstoffzelle festlegt. Diese spezifische Gegenmaßnahme ist beispielsweise einer Zellspannungsklasse zugeordnet, welche einen bestimmungsgemäßen Normalbetrieb der Brennstoffzelle ohne nennenswerte Abweichungen der Zellspannung repräsentiert. Durch das Identifizieren einer konkreten Zellspannungsklasse ist somit mit Hilfe der Zellspannungsmatrix ebenfalls mindestens eine spezifische Gegenmaßnahme identifiziert.

Auf Basis der identifizierten spezifischen Gegenmaßnahme wird mittels des Kontrollmoduls, insbesondere mittels Reaktionsmittel des Kontrollmoduls, der Kontrolleingriff in den Betrieb der Brennstoffzelle erzeugt. Die spezifische Gegenmaßnahme wird somit durchgeführt. Bei erfolgreicher Durchführung der spezifischen Gegenmaßnahme wird die Zellspannung derart verändert, dass die Werte der Zellspannung zumindest näher an einem SOLL-Zellspannungswert liegen als vor der Durchführung des erfindungsgemäßen Verfahrens. Durch iteratives Durchführen des erfindungsgemäßen Verfahrens, insbesondere mit modifizierten, vorzugsweise abgeschwächten spezifischen Gegenmaßnahmen ist somit der Betrieb der Brennstoffzelle kontinuierlich verbesserbar.

Damit bringt ein erfindungsgemäßes Verfahren die gleichen Vorteile mit sich, wie sie ausführlich mit Bezug auf die erfindungsgemäße Betriebsvorrichtung beschrieben worden sind. Demnach hat das erfindungsgemäße Verfahren gegenüber herkömmlichen Verfahren den Vorteil, dass mit einfachen Mitteln sowie auf eine kostengünstige Art und Weise auf Basis ermittelter Zellspannungen sowie dem aktuellen Betriebsmodus der einzelnen Brennstoffzellen konkrete spezifische Gegenmaßnahmen identifiziert sowie durchgeführt werden, um somit die Zellspannungen der Brennstoffzellen auf vorteilhafte Weise zu verändern. Mittels des erfindungsgemäßen Verfahrens ist somit eine schnelle Reaktion auf Schwankungen der Zellspannungen sichergestellt und somit ein längerer bzw. robusterer Betrieb der einzelnen Brennstoffzellen gewährleistet.

Es ist bevorzugt, dass beim Vergleichen der ermittelten Zellspannungen mit der Zellspannungsmatrix eine in der Zellspannungsmatrix definierte Zellspannungsklasse auf Basis mindestens einer der folgenden Zellspannungsaussagen ausgewählt wird:
- Über einen vorgegebenen Zeitraum ermittelte durchschnittliche Zellspannung,
- über den vordefinierten Zeitraum ermittelte maximale Zellspannung,
- über den vordefinierten Zeitraum ermittelte minimale Zellspannung,
- Überschreiten eines vorgegebenen Zellspannungsmaximalwerts,
- Unterschreiten eines vorgegebenen Zellspannungsminimalwerts,
wobei die spezifische Gegenmaßnahme identifiziert wird, welche in der Zellspannungsmatrix derselben Zellspannungsklasse zugeordnet ist. Die Zellspannungsmatrix weist mehrere Zellspannungsklassen auf, welchen jeweils eine oder mehrere spezifische Gegenmaßnahmen zugeordnet sind. Mittels derartiger Zellspannungsaussagen ist eine Zellspannungsklasse identifizierbar, welche einen Betriebszustand der Brennstoffzelle besonders genau charakterisiert. Im Zusammenspiel mit dem ermittelten Betriebsmodus ist somit mit einfachen Mitteln sowie auf eine kostengünstige Art und Weise eine zuverlässige Identifizierung einer geeigneten spezifischen Gegenmaßnahme zum Beeinflussen der Zellspannung der Brennstoffzelle sichergestellt.

Gemäß einer vorteilhaften Weiterbildung der Erfindung erfolgt ein wiederholtes Ermitteln von Zellspannungen der Brennstoffzelle über einen weiteren vorgegebenen Zeitraum sowie ein erneutes Bestimmen eines aktualisierten Betriebsmodus, wobei auf Basis der wiederholt ermittelten Zellspannungen bei unverändertem Betriebsmodus ein wiederholtes Ermitteln der Zellspannungsklasse erfolgt, wobei bei veränderter Zellspannungsklasse aus der Zellspannungsmatrix eine aktualisierte spezifische Gegenmaßnahme identifiziert wird, und wobei die Brennstoffzelle auf Basis der identifizierten aktualisierten spezifischen Gegenmaßnahme mittels des Kontrollmoduls kontrolliert wird. Das Verfahren wird demnach vorzugsweise fortlaufend während des Betriebs der Brennstoffzelle durchgeführt. In Abhängigkeit eines Grads einer Reaktion des Betriebszustands auf die zunächst durchgeführte spezifische Gegenmaßnahme ist bestimmbar, ob die aktuelle Intensität dieser Gegenmaßnahme geeignet ist, die Zellspannung ausreichend zu beeinflussen. Wird festgestellt, dass der Grad der Reaktion zu gering ist, die vorbestimmte minimale Beeinflussung also nicht erreicht wird, kann die Intensität der spezifischen Gegenmaßnahme beispielsweise erhöht werden, um somit eine größere Beeinflussung der Zellspannung der Brennstoffzelle zu bewirken. Alternativ kann eine weitere spezifische Gegenmaßnahme, insbesondere aus derselben Zellspannungsklasse, identifiziert und durchgeführt werden. Dies hat den Vorteil, dass die Auswirkungen der Gegenmaßnahmen überwacht und bei unzureichender Beeinflussung der Zellspannung die Gegenmaßnahmen in veränderter Form durchgeführt werden.

Vorzugsweise weist die spezifische Gegenmaßnahme eine oder mehrere der nachfolgenden Maßnahmen auf:
- Erhöhen eines Zelldrucks der Brennstoffzelle,
- Reduzieren des Zelldrucks der Brennstoffzelle,
- Erhöhen einer Zelltemperatur der Brennstoffzelle,
- Reduzieren der Zelltemperatur der Brennstoffzelle,
- Erhöhen einer Zellluftfeuchte der Brennstoffzelle,
- Reduzieren einer Zellluftfeuchte der Brennstoffzelle,
- Reduzieren eines Anodenbetriebsmittelstroms der Brennstoffzelle,
- Erhöhen des Anodenbetriebsmittelstroms der Brennstoffzelle,
- Reduzieren eines Kathodenbetriebsmittelstroms (Kathoden-Stöchiometrie) der Brennstoffzelle,
- Erhöhen des Kathodenbetriebsmittelstroms (Kathoden-Stöchiometrie) der Brennstoffzelle.

Mittels dieser spezifischen Gegenmaßnahmen ist die Zellspannung der Brennstoffzelle direkt beeinflussbar. Diese spezifischen Gegenmaßnahmen sind den einzelnen Zellspannungsklassen zugeordnet, wobei eine Zellspannungsklasse eine oder mehrere spezifische Gegenmaßnahmen aufweisen kann. Somit ist durch die Zellspannungsmatrix festgelegt, welche spezifische Gegenmaßnahmen bei welcher Zellspannungsklasse durchführbar sind, um die Zellspannung der Brennstoffzelle zu beeinflussen, beispielsweise um die Abweichung der minimalen und durchschnittlichen Zellspannung, insbesondere beim Hochfahren der Brennstoffzelle, zu verringern.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Es zeigen jeweils schematisch:
- Figur 1: eine bevorzugte Ausführungsform eines erfindungsgemäßen Brennstoffzellensystems,
- Figur 2: eine Seitenansicht einer bevorzugten Ausführungsform eines erfindungsgemäßen Kraftfahrzeugs,
- Figur 3: eine bevorzugte Zellspannungsmatrix für den Betriebsmodus "Start Up",
- Figur 4: eine bevorzugte Zellspannungsmatrix für den Betriebsmodus "Full Run",
- Figur 5: eine bevorzugte Zellspannungsmatrix für den Betriebsmodus "Shutdown", und
- Figur 6: in einem Ablaufdiagramm eine bevorzugte Ausführungsform des erfindungsgemäßen Verfahrens.

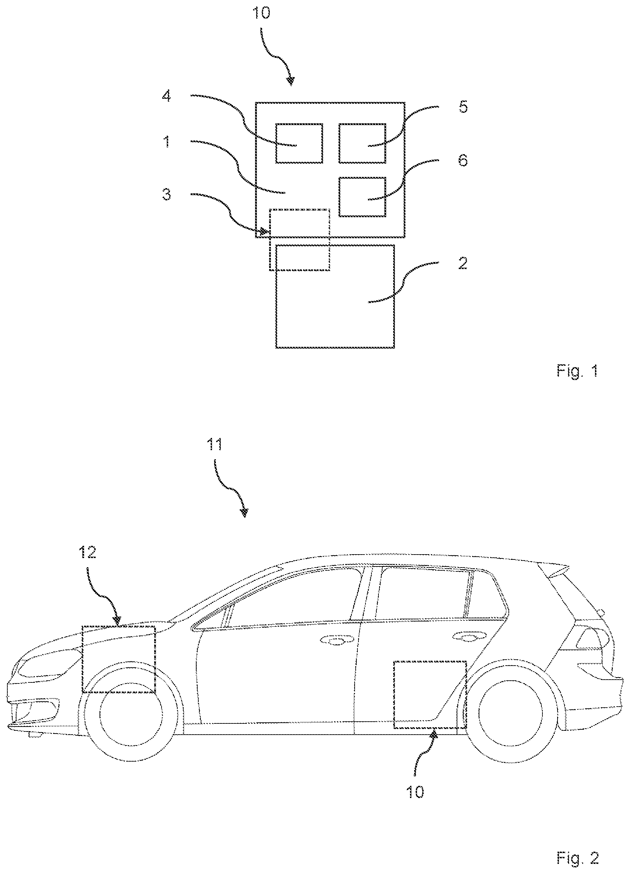

Elemente mit gleicher Funktion und Wirkungsweise sind in den Figuren 1 bis 8 jeweils mit denselben Bezugszeichen versehen.

In Fig. 1 ist eine bevorzugte Ausführungsform eines erfindungsgemäßen Brennstoffzellensystems 10 schematisch dargestellt. Das Brennstoffzellensystem 10 weist eine Brennstoffzelle 2 zum Erzeugen von elektrischem Strom sowie eine Betriebsvorrichtung 1 zum Betreiben der Brennstoffzelle 2 auf. Die Betriebsvorrichtung 1 weist ein Spannungsüberwachungsmodul 3 zum Überwachen einer Zellspannung der Brennstoffzelle 2, ein Kontrollmodul 4 zum Kontrollieren des Betriebs sowie zum Ermitteln eines Betriebsmodus der Brennstoffzelle 2, ein Speichermodul 5 zum Speichern einer Zellspannungsmatrix sowie ein Vergleichsmodul 6 zum Vergleichen des Betriebsmodus der Brennstoffzelle 2 und der überwachten Zellspannung mit der Zellspannungsmatrix zum Ermitteln mindestens einer spezifischen Gegenmaßnahme zum Beeinflussen der Zellspannung der Brennstoffzelle 2 auf. Es können noch weitere Sensoren und Module, wie beispielsweise Temperatursensoren, Drucksensoren, Feuchtesensoren, Entfeuchtungsmodul oder dergleichen, vorgesehen sein.

Fig. 2 zeigt eine bevorzugte Ausführungsform eines erfindungsgemäßen Kraftfahrzeugs 11 schematisch in einer Seitenansicht. Das Kraftfahrzeug 11 weist einen Elektromotor 12 auf, welcher zum Antreiben des Kraftfahrzeugs 11 ausgebildet ist. Ferner weist das Kraftfahrzeug 11 ein erfindungsgemäßes Brennstoffzellensystem 10 zum Bereitstellen elektrischer Energie auf.

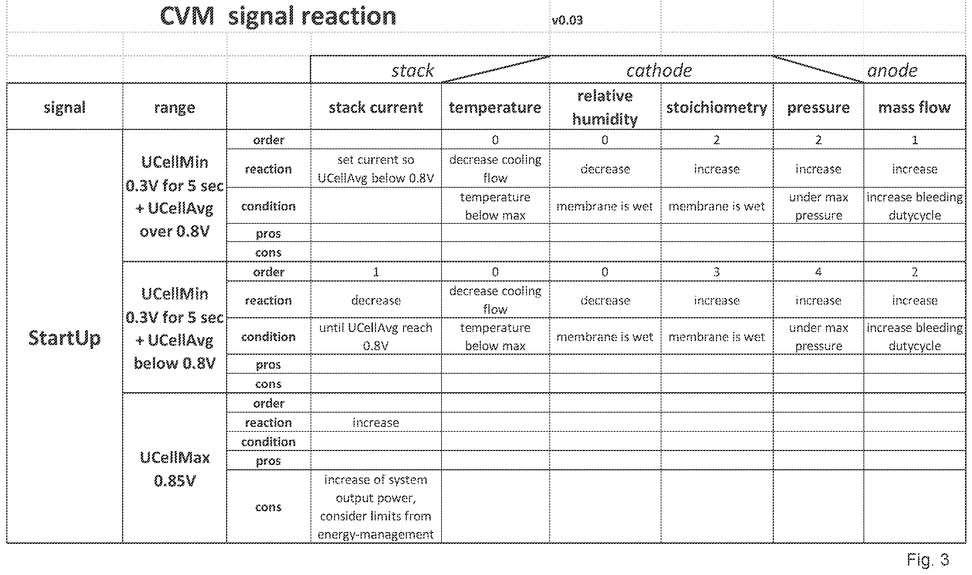

In Fig. 3 bis Fig. 5 sind bevorzugte Signalreaktionsmatrizen für die Betriebsmodi "Start Up" (Hochfahren), "Full Run" (Normalbetrieb), "und "Shutdown" (Herunterfahren) abgebildet. Die Signalreaktionsmatrizen weisen für jeden Betriebsmodus mehrere Zellspannungsklassen auf, welche in der als "Range" bezeichneten Spalte aufgeführt sind.

Im Folgenden wird die Zellspannungsmatrix an Beispielen näher erläutert. Die Zellspannungsmatrix aus Fig. 3 betrifft ein Hochfahren der Brennstoffzelle 2. Bei einer minimalen Spannung von 0,3V über mindestens 5s und einer durchschnittlichen Spannung von unter 0,8V wird die mittlere Zellspannungsklasse der Spalte "Range" ausgewählt. Durchführbare spezifische Gegenmaßnahmen zum Beeinflussen der Zellspannung der Brennstoffzelle sind in der Zeile der ausgewählten Zellspannungsklasse aufgeführt. Demnach werden von der Zellspannungsmatrix beispielsweise eine Reduzierung des elektrischen Stroms, eine Erhöhung des Anodenmassenstroms und eine Erhöhung des Zelldrucks der Brennstoffzelle als spezifische Gegenmaßnahmen vorgegeben.

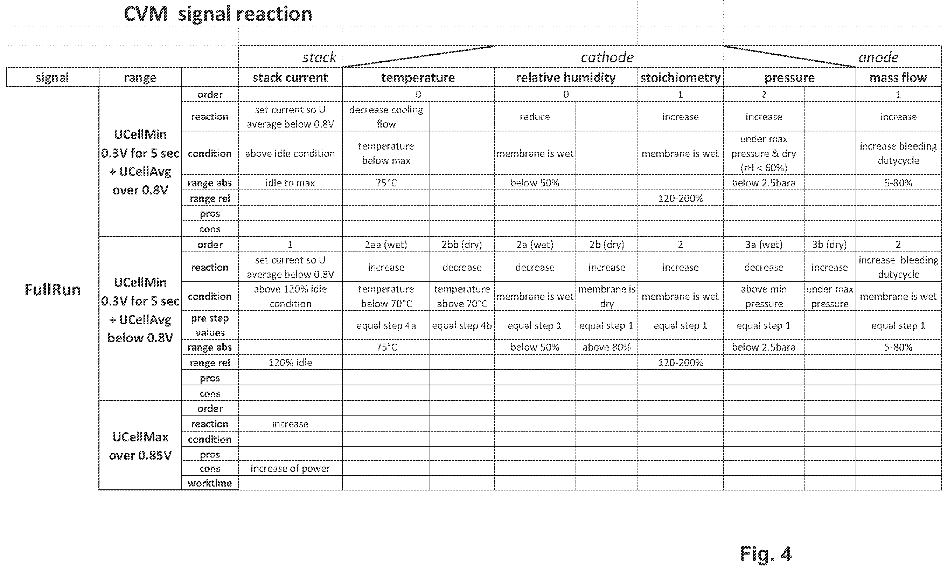

Die Zellspannungsmatrix aus Fig. 4 betrifft einen Normalbetrieb der Brennstoffzelle 2. Bei einer maximalen Zellspannung von über 0,85V wird die mit "UCellMax over 0.85V" bezeichnete Zellspannungsklasse der Spalte "Range" ausgewählt. Durchführbare spezifische Gegenmaßnahmen zum Beeinflussen der Zellspannung der Brennstoffzelle sind in der Zeile der ausgewählten Zellspannungsklasse aufgeführt. Demnach wird von der Zellspannungsmatrix beispielsweise eine Erhöhung des Brennstoffzellenstroms als spezifische Gegenmaßnahme vorgegeben.

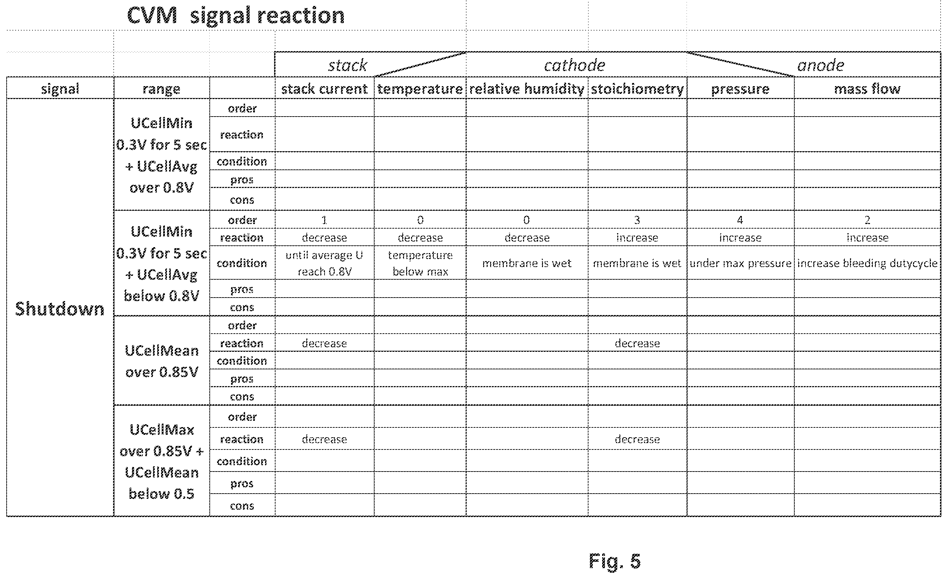

Die Zellspannungsmatrix aus Fig. 5 betrifft ein Herunterfahren der Brennstoffzelle 2. Bei einer hohen Spannung von über 0,85V wird die zweite Zellspannungsklasse von unten ausgewählt. Diese Zeile enthält als durchführbare spezifische Gegenmaßnahme zum Beeinflussen der Zellspannung der Brennstoffzelle eine Reduzierung des Kathodenmassenstroms sowie eine Reduzierung des elektrischen Stroms. Bei einer minimalen Zellspannung von 0,3V für 5s sowie einer durchschnittlichen Zellspannung von unter 0,8V wird die zweite Zellspannungsklasse von oben ausgewählt. Zugehörige spezifische Gegenmaßnahmen sind beispielsweise eine Reduzierung des elektrischen Stroms, eine Erhöhung des Anodenmassenstroms oder eine Erhöhung des Kathodenmassenstroms.

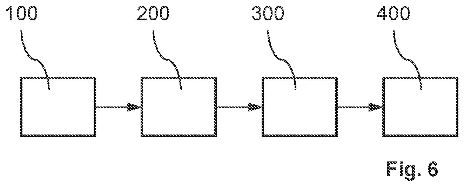

Eine bevorzugte Ausführungsform eines erfindungsgemäßen Verfahrens ist in Fig. 6 in einem Flussdiagramm dargestellt. In einem ersten Verfahrensschritt 100 ermittelt das Spannungsüberwachungsmodul 3 der Betriebsvorrichtung 1 über einen vorgegebenen Zeitraum Zellspannungen der Brennstoffzelle 2. In einem zweiten Verfahrensschritt 200 bestimmt das Kontrollmodul 4 der Betriebsvorrichtung 1 einen Betriebsmodus der Brennstoffzelle 2. In einem dritten Verfahrensschritt 300 vergleicht das Vergleichsmodul 6 der Betriebsvorrichtung 1 die ermittelten Zellspannungen sowie den bestimmten Betriebsmodus mit einer in dem Speichermodul 5 gespeicherten Zellspannungsmatrix. Auf diese Weise identifiziert das Vergleichsmodul 6 eine spezifische Gegenmaßnahme zum Beeinflussen der Zellspannung der Brennstoffzelle 2. In einem vierten Verfahrensschritt 400 erzeugt das Kontrollmodul 4 einen Kontrolleingriff in den Betrieb der Brennstoffzelle 2 auf Basis der identifizierten spezifischen Gegenmaßnahme. Das bedeutet, dass die identifizierte Gegenmaßnahme zum Beeinflussen der Zellspannung durchgeführt wird.

Die Erfindung lässt neben den dargestellten Ausführungsformen weitere Gestaltungsgrundsätze zu. D. h., die Erfindung soll nicht auf die mit Bezug auf die Figuren erläuterten Ausführungsbeispiele beschränkt betrachtet werden.

### Bezugszeichenliste

- 1: Betriebsvorrichtung
- 2: Brennstoffzelle
- 3: Spannungsüberwachungsmodul
- 4: Kontrollmodul
- 5: Speichermodul
- 6: Vergleichsmodul

- 10: Brennstoffzellensystem
- 11: Kraftfahrzeug
- 12: Elektromotor

- 100: erster Verfahrensschritt
- 200: zweiter Verfahrensschritt
- 300: dritter Verfahrensschritt
- 400: vierter Verfahrensschritt

## Patentansprüche

1. Betriebsvorrichtung (1) zum Betreiben einer Brennstoffzelle (2), aufweisend ein Spannungsüberwachungsmodul (3) zum Überwachen einer Zellspannung der Brennstoffzelle (2) und ein Kontrollmodul (4) zum Kontrollieren des Betriebs der Brennstoffzelle (2), wobei die Betriebsvorrichtung (1) ein Speichermodul (5) zum Speichern einer Zellspannungsmatrix sowie ein Vergleichsmodul (6) zum Vergleichen eines Betriebsmodus der Brennstoffzelle (2) und der überwachten Zellspannung mit der Zellspannungsmatrix zum Ermitteln mindestens einer spezifischen Gegenmaßnahme zum Beeinflussen der Zellspannung der Brennstoffzelle (2) aus der Zellspannungsmatrix aufweist, wobei das Kontrollmodul (4) Reaktionsmittel aufweist für einen Kontrolleingriff in den Betrieb der Brennstoffzelle (2) auf Basis der mindestens einen ermittelten spezifischen Gegenmaßnahme, **dadurch gekennzeichnet, dass** das Spannungsüberwachungsmodul (3) zum Ermitteln einer durchschnittlichen Zellspannung über einen vorgegebenen Zeitraum sowie zum Ermitteln einer innerhalb des vordefinierten Zeitraums maximalen Zellspannung und minimalen Zellspannung ausgebildet ist.

2. Betriebsvorrichtung (1) nach Anspruch 1,
**dadurch gekennzeichnet, dass**
die Zellspannungsmatrix mehrere Betriebsmodi aufweist, wobei jedem Betriebsmodus mehrere Zellspannungsklassen zugeordnet sind, und wobei den einzelnen Zellspannungsklassen jeweils mindestens eine spezifische Gegenmaßnahme zum Beeinflussen der Zellspannung der Brennstoffzelle (2) zugeordnet ist.

3. Betriebsvorrichtung (1) nach Anspruch 2,
**dadurch gekennzeichnet, dass**
die einzelnen Zellspannungsklassen jeweils mindestens eine der folgenden Zellspannungsaussagen aufweisen:
- durchschnittliche Zellspannung über einen vorgegebenen Zeitraum,
- eine minimale Zellspannung über einen vordefinierten Zeitraum,
- eine maximale Zellspannung über den vordefinierten Zeitraum,
- das Überschreiten eines vorgegebenen Zellspannungsmaximums in dem vorgegebenen Zeitraum,
- das Unterschreiten eines vorgegebenen Zellspannungsminimums in dem vorgegebenen Zeitraum.

4. Betriebsvorrichtung (1) nach Anspruch 2 oder 3,
**dadurch gekennzeichnet, dass**
die Zellspannungsmatrix für mindestens eine Zellspannungsklasse mehrere unterschiedliche spezifische Gegenmaßnahmen aufweist.

5. Betriebsvorrichtung (1) nach Anspruch 4,
**dadurch gekennzeichnet, dass**
die unterschiedlichen spezifischen Gegenmaßnahmen innerhalb einer Zellspannungsklasse in der Zellspannungsmatrix hierarchisch gegliedert sind.

6. Betriebsvorrichtung (1) nach einem der Ansprüche 2 bis 5,
**dadurch gekennzeichnet, dass**
die Zellspannungsmatrix als spezifische Gegenmaßnahmen mindestens eine der folgenden Maßnahmen aufweist:
- Erhöhen eines Zelldrucks der Brennstoffzelle (2),
- Reduzieren eines Zelldrucks der Brennstoffzelle (2),
- Erhöhen einer Zelltemperatur der Brennstoffzelle (2),
- Reduzieren der Zelltemperatur der Brennstoffzelle (2),
- Erhöhen einer Zellluftfeuchte der Brennstoffzelle (2),
- Reduzieren einer Zellluftfeuchte der Brennstoffzelle (2),
- Erhöhen des Anodenbetriebsmittelstroms der Brennstoffzelle (2),
- Reduzieren eines Anodenbetriebsmittelstroms der Brennstoffzelle (2),
- Reduzieren eines Kathodenbetriebsmittelstroms der Brennstoffzelle (2),
- Erhöhen des Kathodenbetriebsmittelstroms der Brennstoffzelle (2).

7. Brennstoffzellensystem (10) zur Bereitstellung elektrischer Energie, aufweisend eine Brennstoffzelle (2) und eine Betriebsvorrichtung (1) zum Betreiben der Brennstoffzelle (2),
**dadurch gekennzeichnet, dass**
die Betriebsvorrichtung (1) nach einem der Ansprüche 1 bis 6 ausgebildet ist.

8. Kraftfahrzeug (11) mit einem Brennstoffzellensystem (10) nach Anspruch 7 zur Bereitstellung elektrischer Energie und wenigstens einem Elektromotor (12) zum Antreiben des Kraftfahrzeugs (11) unter zumindest teilweiser Verwendung der elektrischen Energie, die durch das Brennstoffzellensystem (10) bereitgestellt wird.

9. Verfahren zum Betreiben eines Brennstoffzellensystems (10) nach Anspruch 7, aufweisend die folgenden Schritte:
- Ermitteln der aktuellen Charakteristika von Zellspannungen der Brennstoffzellen (2) mittels des Spannungsüberwachungsmoduls (3) der Betriebsvorrichtung (1),
- Bestimmen eines Betriebsmodus der Brennstoffzelle (2) mittels des Kontrollmoduls (4) der Betriebsvorrichtung (1),
- Vergleichen der ermittelten Zellspannungen sowie des bestimmten Betriebsmodus mit einer in dem Speichermodul (5) gespeicherten Zellspannungsmatrix zum Identifizieren einer spezifischen Gegenmaßnahme zum Beeinflussen der Zellspannung der Brennstoffzelle (2) mittels des Vergleichsmoduls (6), und
- Erzeugen eines Kontrolleingriffs in den Betrieb der Brennstoffzelle (2) auf Basis der identifizierten spezifischen Gegenmaßnahme mittels des Kontrollmoduls (4),
**dadurch gekennzeichnet, dass**
beim Vergleichen der ermittelten Zellspannungen mit der Zellspannungsmatrix eine in der Zellspannungsmatrix definierte Zellspannungsklasse auf Basis mindestens einer der folgenden Zellspannungsaussagen ausgewählt wird:
- über einen vorgegebenen Zeitraum ermittelte durchschnittliche Zellspannung,
- über den vordefinierten Zeitraum ermittelte maximale Zellspannung,
- über den vordefinierten Zeitraum ermittelte minimale Zellspannung,
- Überschreiten eines vorgegebenen Zellspannungsmaximalwerts,
- Unterschreitens eines vorgegebenen Zellspannungsminimalwerts,
wobei die spezifische Gegenmaßnahme identifiziert wird, welche in der Zellspannungsmatrix derselben Zellspannungsklasse zugeordnet ist.

10. Verfahren nach Anspruch 9,
**dadurch gekennzeichnet, dass**
mittels des Spannungsüberwachungsmoduls (3) ein wiederholtes Ermitteln von Zellspannungen der Brennstoffzelle (2) über einen weiteren vorgegebenen Zeitraum sowie ein erneutes Bestimmen eines aktualisierten Betriebsmodus erfolgt, wobei auf Basis der wiederholt ermittelten Zellspannungen bei unverändertem Betriebsmodus ein wiederholtes Ermitteln der Zellspannungsklasse erfolgt, wobei bei unveränderter Zellspannungsklasse nach einer in der Zellspannungsmatrix vorgegebenen Hierarchisierung mindestens eine weitere spezifische Gegenmaßnahme identifiziert und in Abhängigkeit einer Veränderung der Zellspannungsklasse sukzessive durchgeführt wird.

11. Verfahren nach Anspruch 10,
**dadurch gekennzeichnet, dass**
sämtliche spezifische Gegenmaßnahmen einer Zellspannungsklasse gemäß ihrer Hierarchisierung solange sukzessive durchgeführt werden, bis die Zellspannung einer vordefinierten Zellspannungsklasse zuordenbar ist.

12. Verfahren nach einem der Ansprüche 9 bis 11,
**dadurch gekennzeichnet, dass**
mittels des Spannungsüberwachungsmoduls (3) ein wiederholtes Ermitteln von Zellspannungen der Brennstoffzelle (2) über einen weiteren vorgegebenen Zeitraum sowie ein erneutes Bestimmen eines aktualisierten Betriebsmodus erfolgt, wobei auf Basis der wiederholt ermittelten Zellspannungen bei unverändertem Betriebsmodus ein wiederholtes Ermitteln der Zellspannungsklasse erfolgt, wobei bei veränderter Zellspannungsklasse aus der Zellspannungsmatrix eine aktualisierte spezifische Gegenmaßnahme identifiziert wird, und wobei die Brennstoffzelle (2) auf Basis der identifizierten aktualisierten spezifischen Gegenmaßnahme mittels des Kontrollmoduls (4) kontrolliert wird.

13. Verfahren nach einem der Ansprüche 9 bis 12,
**dadurch gekennzeichnet, dass**
die spezifische Gegenmaßnahme eine oder mehrere der nachfolgenden Maßnahmen aufweist:
- Erhöhen eines Zelldrucks der Brennstoffzelle (2),
- Reduzieren des Zelldrucks der Brennstoffzelle (2),
- Erhöhen einer Zelltemperatur der Brennstoffzelle (2),
- Reduzieren der Zelltemperatur der Brennstoffzelle (2),
- Erhöhen einer Zellluftfeuchte der Brennstoffzelle (2),
- Erhöhen einer Zellluftfeuchte der Brennstoffzelle (2),
- Reduzieren eines Anodenbetriebsmittelstroms der Brennstoffzelle (2),
- Erhöhen des Anodenbetriebsmittelstroms der Brennstoffzelle (2),
- Reduzieren eines Kathodenbetriebsmittelstroms der Brennstoffzelle (2),
- Erhöhen des Kathodenbetriebsmittelstroms der Brennstoffzelle (2).

## Claims

1. Operating device (1) for operating a fuel cell (2), comprising a voltage monitoring module (3) for monitoring a cell voltage of the fuel cell (2) and a control module (4) for controlling the operation of the fuel cell (2), wherein the operating device (1) comprises a storage module (5) for storing a cell voltage matrix and a comparison module (6) for comparing an operating mode of the fuel cell (2) and the monitored cell voltage with the cell voltage matrix to determine at least one specific countermeasure for influencing the cell voltage of the fuel cell (2) from the cell voltage matrix, wherein the control module (4) comprises reaction means for a control intervention in the operation of the fuel cell (2) based on the at least one determined specific countermeasure, **characterized in that** the voltage monitoring module (3) is configured to determine an average cell voltage over a predetermined period as well as to determine a maximum cell voltage and minimum cell voltage within the predefined period. is.

2. Operating device (1) according to claim 1, **characterized in that** the cell voltage matrix comprises several operating modes, each operating mode being assigned several cell voltage classes, and each cell voltage class being assigned at least one specific countermeasure for influencing the cell voltage of the fuel cell (2).

3. Operating device (1) according to claim 2, **characterized in that** each cell voltage class has at least one of the following cell voltage statements:
• Average cell voltage over a predetermined period,
• a minimum cell voltage over a predetermined period,
• a maximum cell voltage over the predetermined period,
• exceeding a predetermined maximum cell voltage within the predetermined period,
• falling below a predetermined minimum cell voltage within the predetermined period.

4. Operating device (1) according to claim 2 or 3, **characterized in that** the cell voltage matrix comprises several different specific countermeasures for at least one cell voltage class.

5. Operating device (1) according to claim 4, **characterized in that** the different specific countermeasures within a cell voltage class are hierarchically structured in the cell voltage matrix.

6. Operating device (1) according to one of claims 2 to 5, **characterized in that** the cell voltage matrix comprises at least one of the following specific countermeasures:
• Increasing the cell pressure of the fuel cell (2),
• Reducing the cell pressure of the fuel cell (2),
• Increasing the cell temperature of the fuel cell (2),
• Reducing the cell temperature of the fuel cell (2),
• Increasing the cell humidity of the fuel cell (2),
• Reducing the cell humidity of the fuel cell (2).
• Increasing the anode operating current of the fuel cell (2),
• Reducing the anode operating current of the fuel cell (2),
• Reducing the cathode operating current of the fuel cell (2),
• Increasing the cathode operating current of the fuel cell (2).

7. Fuel cell system (10) for providing electrical energy, comprising a fuel cell (2) and an operating device (1) for operating the fuel cell (2), **characterized in that** the operating device (1) is configured according to any one of claims 1 to 6.

8. Motor vehicle (11) with a fuel cell system (10) according to claim 7 for providing electrical energy and at least one electric motor (12) for driving the motor vehicle (11) using at least some of the electrical energy provided by the fuel cell system (10).

9. Method for operating a fuel cell system (10) according to claim 7, comprising the following steps:
• Determining the current characteristics of the cell voltages of the fuel cells (2) using the voltage monitoring module (3) of the operating device (1),
• Determining an operating mode of the fuel cell (2) using the control module (4) of the operating device (1),
• Comparing the determined cell voltages and the determined operating mode with a cell voltage matrix stored in the storage module (5) to identify a specific countermeasure for influencing the cell voltage of the fuel cell (2) using the comparison module (6), and
• Generating a control intervention in the operation of the fuel cell (2) based on the identified specific countermeasure using the control module (4), **characterized in that**, when comparing the determined cell voltages with the cell voltage matrix, a cell voltage class defined in the cell voltage matrix is selected based on at least one of the following cell voltage statements:
• via a Average cell voltage determined over a predefined period
• maximum cell voltage determined over a predefined period
• minimum cell voltage determined over a predefined period,
• exceeding a predefined maximum cell voltage value,
• falling below a predefined minimum cell voltage value,
whereby the specific countermeasure is identified which is assigned to the same cell voltage class in the cell voltage matrix.

10. Method according to claim 9, **characterized in that** the voltage monitoring module (3) is used to repeatedly determine the cell voltages of the fuel cell (2) over a further predefined period and to repeatedly determine an updated operating mode, wherein, based on the repeatedly determined cell voltages with an unchanged operating mode, the cell voltage class is repeatedly determined, wherein, with an unchanged cell voltage class, at least one further specific countermeasure is identified according to a hierarchy specified in the cell voltage matrix and is successively implemented depending on a change in the cell voltage class.

11. Method according to claim 10, **characterized in that** all specific countermeasures of a cell voltage class according to their hierarchization is carried out successively until the cell voltage can be assigned to a predefined cell voltage class.

12. Method according to one of claims 9 to 11, **characterized in that** the voltage monitoring module (3) is used to repeatedly determine the cell voltages of the fuel cell (2) over a further predetermined period and to repeatedly determine an updated operating mode, wherein, based on the repeatedly determined cell voltages with an unchanged operating mode, the cell voltage class is repeatedly determined, wherein, if the cell voltage class changes, an updated specific countermeasure is identified from the cell voltage matrix, and wherein the fuel cell (2) is controlled by the control module (4) based on the identified updated specific countermeasure.

13. Method according to any one of claims 9 to 12, **characterized in that** the specific countermeasure comprises one or more of the following:
• Increasing the cell pressure of the fuel cell (2),
• Reducing the cell pressure of the fuel cell (2),
• Increasing the cell temperature of the fuel cell (2),
• Reducing the cell temperature of the fuel cell (2),
• Increasing the cell humidity of the fuel cell (2),
• Reducing the anode fluid flow rate of the fuel cell (2),
• Increasing the anode fluid flow rate of the fuel cell (2),
• Reducing the cathode fluid flow rate of the fuel cell (2),
• Increasing the cathode fluid flow rate of the fuel cell (2).

## Revendications

1. Dispositif d'exploitation (1) pour l'actionnement d'une pile à combustible (2), comprenant un module de surveillance de tension (3) pour surveiller la tension d'une cellule du pile à combustible (2) et un module de contrôle (4) pour contrôler le fonctionnement de la pile à combustible (2), où le dispositif d'exploitation (1) comprend un module de stockage (5) pour stocker une matrice de tension de la pile et un module de comparaison (6) pour comparer un mode de fonctionnement de la pile à combustible (2) et la tension de la pile à combustible surveillée avec la matrice de tension de la pile à combustible afin de déterminer au moins une contre-mesure spécifique influençant la tension de la pile à combustible (2) à partir de la matrice de tension de la cellule, où le module de contrôle (4) comprend les moyens de réaction pour une intervention de contrôle dans le fonctionnement de la pile à combustible (2) basée sur au moins une contre-mesure spécifique déterminée, **caractérisée par le fait que** le module de surveillance de tension (3) est configuré pour déterminer une tension moyenne de cellule sur une période prédéterminée ainsi que pour déterminer une tension maximale et une tension minimale de cellule dans la période prédéfinie.

2. Dispositif de fonctionnement (1) selon l'affirmation 1, **caractérisé par le fait que** la matrice de tension de la cellule comprend plusieurs modes de fonctionnement, chaque mode de fonctionnement étant attribué à plusieurs classes de tension de cellule, et chaque classe de tension de cellule étant assignée au moins une contre-mesure spécifique pour influencer la tension de la cellule à combustible (2).

3. Dispositif de fonctionnement (1) selon la revendication 2, **caractérisé en ce que** chaque classe de tension de cellule possède au moins l'une des indications de tension de cellule suivantes :
• Tension moyenne des cellules sur une période prédéterminée,
• une tension minimale de cellule sur une période prédéterminée,
• une tension maximale de cellule sur la période prédéterminée,
• dépasser une tension maximale de cellule prédéterminée dans la période prédéterminée,
• tombant en dessous d'une tension minimale de cellule prédéterminée dans la période prédéterminée.

4. Dispositif de fonctionnement (1) selon la revendication 2 ou 3, **caractérisé par le fait que** la matrice de tension de la cellule comprend plusieurs contre-mesures spécifiques différentes pour au moins une classe de tension de cellule.

5. Dispositif d'exploitation (1) selon l'affirmation 4, **caractérisé par le fait que** les différentes contre-mesures spécifiques au sein d'une classe de tension de cellule sont structurées hiérarchiquement dans la matrice de tension de la cellule.

6. Dispositif d'exploitation (1) selon l'une des revendications 2 à 5, **caractérisé par le fait que** la matrice de tension de la cellule comprend au moins une des contre-mesures spécifiques suivantes :
• Augmenter la pression de la cellule de la pile à combustible (2),
• Réduire la pression de la pile à combustible (2),
• Augmenter la température de la pile à combustible (2),
• Réduire la température de la cellule de la pile à combustible (2),
• Augmenter l'humidité de la cellule de la pile à combustible (2),
• Réduire l'humidité de la cellule à combustible (2).
• Augmentation du courant de fonctionnement de l'anode de la pile à combustible (2),
• Réduction du courant de fonctionnement de l'anode de la pile à combustible (2),
• Réduire le courant de fonctionnement de la cathode de la pile à combustible (2),
• Augmentation du courant de fonctionnement de la cathode de la pile à combustible (2).

7. Système de pile à combustible (10) pour fournir de l'énergie électrique, comprenant une pile à combustible (2) et un dispositif d'exploitation (1) pour l'actionnement de la pile à combustible (2), **caractérisé par** la configuration du dispositif d'exploitation (1) selon l'une des revendications 1 à 6.

8. Véhicule à moteur (11) avec un système de pile à combustible (10) selon la revendication 7 pour la fourniture d'énergie électrique et au moins un moteur électrique (12) pour la conduite du véhicule (11) utilisant au moins une partie de l'énergie électrique fournie par le système de pile à combustible (10).

9. Une méthode pour faire fonctionner un système de pile à combustible (10) selon la revendication 7, comprenant les étapes suivantes :
• Détermination des caractéristiques de courant des tensions des cellules des piles à combustible (2) à l'aide du module de surveillance de tension (3) du dispositif d'exploitation (1),
• Déterminer un mode de fonctionnement de la pile à combustible (2) à l'aide du module de contrôle (4) du dispositif d'exploitation (1),
• Comparaison des tensions de cellules déterminées et des tensions déterminées mode de fonctionnement avec une matrice de tension de la cellule stockée dans le module de stockage (5) pour identifier une contre-mesure spécifique influençant la tension de la pile à combustible (2) en utilisant le module de comparaison (6), et
• Générer une intervention de contrôle dans le fonctionnement de la pile à combustible (2) basée sur la contre-mesure spécifique identifiée utilisant le module de contrôle, **caractérisée par le fait que**, lors de la comparaison des tensions déterminées de la cellule avec la matrice de tension de la cellule, une classe de tension de cellule définie dans la matrice de tension de la cellule est sélectionnée sur la base d'au moins une des déclarations de tension de la cellule suivantes :
• via une tension moyenne de cellules déterminée sur une période prédéfinie,
• Tension maximale de la cellule déterminée sur une période prédéfinie,
• tension minimale de la cellule déterminée sur une période prédéfinie,
• dépassant une valeur maximale de tension de cellule prédéfinie,
• tombant en dessous d'une valeur minimale de tension de cellule prédéfinie,
• où la contre-mesure spécifique est identifiée et qui est attribuée à la même classe de tension de cellule dans la matrice de tension de cellule.

10. Méthode selon la revendication 9, **caractérisée par le fait que** le module de surveillance de tension (3) est utilisé pour déterminer à plusieurs reprises les tensions des cellules de la pile à combustible (2) sur une période prédéfinie supplémentaire et pour déterminer à plusieurs reprises un mode de fonctionnement mis à jour, dans lequel, sur la base des tensions de cellules déterminées à plusieurs reprises avec un mode de fonctionnement inchangé, la classe de tension de la cellule est déterminée à plusieurs reprises, où, avec une classe de tension de cellule inchangée, au moins une contre-mesure spécifique supplémentaire est identifiée selon une hiérarchie spécifiée dans la matrice de tension de la cellule et est mise en œuvre successivement selon un changement de la classe de tension de la cellule.

11. Méthode selon la revendication 10, **caractérisée en ce que** toutes les contre-mesures spécifiques d'une classe de tension de cellule selon leur hiérarchisation sont effectuées successivement jusqu'à ce que la tension de la cellule puisse être attribuée à une classe de tension de cellule prédéfinie.

12. Méthode selon l'une des revendications 9 à 11, **caractérisée par le fait que** le module de surveillance de tension (3) est utilisé pour déterminer à plusieurs reprises les tensions de la pile à combustible (2) sur une période supplémentaire prédéterminée et pour déterminer à plusieurs reprises un mode de fonctionnement mis à jour, où, sur la base des tensions de cellules déterminées à répétition avec un mode de fonctionnement inchangé, La classe de tension de la cellule est déterminée à plusieurs reprises, où, si la classe de tension de la cellule change, une contre-mesure spécifique mise à jour est identifiée à partir de la matrice de tension de la cellule, et où la pile à combustible (2) est contrôlée par le module de contrôle (4) sur la base de la contre-mesure spécifique mise à jour identifiée.

13. Une méthode selon l'une des revendications 9 à 12, **caractérisée en ce que** la contre-mesure spécifique comprend une ou plusieurs des éléments suivants :
• Augmenter la pression de la cellule de la pile à combustible (2),
• Réduire la pression de la pile à combustible (2),
• Augmenter la température de la pile à combustible (2),
• Réduire la température de la cellule de la pile à combustible (2),
• Augmenter l'humidité de la cellule de la pile à combustible (2),
• Réduire le débit du fluide anode de la pile à combustible (2),
• Augmenter le débit du fluide de l'anode de la pile à combustible (2),
• Réduire le débit du fluide cathodique de la pile à combustible (2),
• Augmentation du débit du fluide cathodique de la pile à combustible (2).
